# EUROPEAN PATENT APPLICATION

(11) **EP 1 770 715 A1**
(43) Date of publication of application: **04.04.2007**
(21) Application number: 05447236.0
(22) Date of filing: 20.10.2005
(51) Int. Cl.: G21B 1/00

(54) **Micro plasma reactor**

(30) Priority: 03.10.2005 EP 05447221
(71) Applicant: Tavakoli, Mehran Keshe, 8573 Tiegem (BE)
(72) Inventor: Tavakoli, Mehran Keshe, 8573 Tiegem (BE)

(57) **Abstract**

A fixed or handheld micro-plasma-reactor can be build-in, connected with and/or inserted into various electrical/electronic devices (i.e. mobile phones, computers), in various objects (i.e. lighting devices in general, light bulb, microchips, IC's), in various container types (i.e. cooking pan) and all type of machines, i.e. vacuum-cleaner, pumps, electrical car, etc., to generate DC current and/or AC, and consequently the various uses resulting from electrical current, for lighting, for heating/cooling, and desired process (i.e. creation magnetic fields).

The self-sustaining plasmatic process gives independent functioning without connections to any electrical power network, solar cells or the need to recharge. New type of products will be created. Different type of micro-reactors are decribed, and new methodes of technology.

## Description

We refer to the priority European patent application Nr. 05447221.2 / EP 05447221 dated October 3, 2005, introduced by the same inventor.

In above mentioned patent application an extensive description and several claims were made related to new plasma reactors.
This new patent-application contains many of the basic ideas disclosed and claimed in EP 05447221 in more detailed way or in variations. There are also methods described which were not disclosed in the abovementioned patent application. This invention relates to an energy producing system, method, concept and technology whereby in a reactor-embodiment a chain of energetic events is created via a rotative magnetic initiation of a basic ionization of a gas (i.e. hydrogen) or other matters, which then triggers a controllable chain of energy transfers (so called scintillation) to the next following layer(s) of introduced gasses (i.e. He, Ne, Ar, Kr, Xe) and all other introduced elements of the periodic table (i.e. Li, Be, K, Ca, Ti, ...Pt, etc.) and/or their introduced molecule combinations (i.e. vapor). We show now also that injection of specific liquid metallic elements has advantages.

The technology for creation of light and heat using the principal of creation of energy of the system using the principal of the patent, mainly can utilise the single magnetic field or more magnetic field principal of the patent.

The double magnetic fields effect for higher current production is an alternative.

The other alternative will be the use of the lighting and the heating in the caroline core for the creation of the extreme ultraviolet light with or without transparent inner and outer core wall, or the use of this ray inside the rector core for lithography is possible.

The creation of the ionisation which can lead to current that in conjunction with the matters in the core of the reactor can lead to creation of the single at least one dimension or more this being three dimensional spherical or any other shape magnetic field, which can cross the boundaries of any core, this being made of any material, this being plasma, gas or other states of matter, that the interaction between the magnetic field of the caroline core or any other layers of the cores of the reactor, in interacting with the charge particles, which could be deliberately created, by means of tube , or paint or lamination, in the vicinity of the core or the charge particles in the atmosphere around the core, to create heat or light, through the principal of the interaction of charge particles with a magnetic field.

In this system using the principal introduced in the creation of the reactor in the main patent application N° 05447221.2 / EP 05447221 the materials can be introduced through or positioned in different parts of the core by means of saddling or empty chambers or floating cavities or loose balls created by any means or through any method, in the/ or on the central column or any position in at least one core of the reactor, the material individual form like atomic or plasma or others , or compounds like molecules or as compound of different atoms or molecules or any other form from plasma or energy package to solid, can bee used for the containment and material for the core or production of new materials.

Where the matter can be allowed to be in any gravitational conditions, this being from zero to maximum gravity that a system could attain through its design.

A large potential market is open for small plasma reactors. The embodiment can be any material, but for prototyping we use standard steel. In applications such as for lamps a part of the body will be glass or another transparant material (i.e. a synthetisch composite).

We disclose a fixed or handheld micro-plasma-reactor (10 + 11) which can be build-in, connected with and/or inserted into various electrical/electronic devices (i.e. a refrigerator, various kitchen, household and professional devices, cool box, mobile phone, computer, medical apparatus, laser, satellite systems, desalination unit, desert air-to-water-transformer collecting units, EM-wave transmitter, etc.).
Such micro-plasma-reactor can also be incorporated in various objects (i.e. lighting devices in general, light bulb, lamp, torch, light strip, light beam, flood light, floor light, door light, garden light, traffic-light, street-lighting, signalization, meter, sensor, heat-generating clothes, space clothing, pillow, connector, wire, conductors, semi-conductors, microchips, IC's, magnetic locks, etc.).
A micro-plasma-reactor may also be incorporated or used in various container types (i.e. box, cooking pan, drum, 40 FT, greenhouse, etc.).
Many applications are possible for all type of machines, i.e. vacuum-cleaner, ventilator, calculator, drill, mixer, wheel-chair, pumps, carpenter tools, electrical car, electric bike, radio, office machines, etc.
The purpose of the micro-plasma-reactor can be to generate DC current (similar to a battery) and/or AC current or combination of DC and AC-current, and consequently the various uses resulting from electrical current.

A micro-plasma-reactor can be used also for lighting and for heating/cooling, but also to maintain at least one desired process (i.e. the creation of one or more magnetic fields, two magnetic fields used for creating magnetic locks, etc.).
Due the self-sustaining process the operation will last for a long period of time (i.e. 5 years), which can make the abovementioned functioning in devices, objects, containers and machines possible without that they are connected to an electrical power network, without being equipped with solar cells or to any other manner of traditional power source, and/or without the need to recharge. This brings a complete new way of use of traditional products and concept, but also new type of products will be created.

We describe now two specific micro-reactors. The first micro-plasma-reactor has at least one closed, internal fixed reactor chamber in which at least one inert gas (19, 23, 24) or any other gasses or elements or isotopes or other matters is present, like Hydrogen (H) (22) or liquid Helium (He), and in which the inside chamber wall(s) is equipped with at least one layer and/or zone of one or more radioactive material(s) that will provoke scintillation.
The second micro-plasma-reactor has at least one reactor chamber in which at least one inert gas or any other element or isotope is present, like liquid Helium (He), to which a very light radioactive material (i.e. a dilution, granules, dust) is added that will provoke scintillation. But in these two micro-plasma-reactors - additionally - at least one atomic gas, metallic material vapour (20, 25) and/or liquid state element of the periodic table can be added, in example: Potassium (K), Sodium (Na), Stratum (Sr) for high temperature operations above 1000K, etc.;

We claim and describe here also a new method by which in a plasma reactor chamber at least one metallic material vapour (20)(i.e. K, Na, Ca, Mg) or liquid metallic element layer is brought by injection means between at least two layers of inert gasses (i.e. H, He, Ne, Xr), what will create - without rotation or adjustable speed of rotation and if the correct element combinations are used - a magnetic field by the added metallic type layer(s) (in example: element Sodium between Neon 20 and Argon 40, or 41) causing a recurring process of creation of magnetic field, where for example if atomic Potassium is used in the reactor, this element through beta decay lead to creation of Argon and the by-product of scintillation for example Neon gas or the Argon itself leading to ionization of the gasses (i.e. Hydrogen) leading to creation of free electron for creation of current and establishment of plasma within the caroline core.
This new method makes it possible to create magnetic field (17A) within the caroline core (12) with the use of metallic or semi-metallic materials in the form of vapour or solid or any other state of matter in between different layers of the material which their motion within the core can lead to creation of magnetic fields due to the passing of the electrons which created by ionization passing through this metallic or semi-metallic material which is in rotation within the core, and this is a self-sustaining energy system or battery system which the life of the battery can be predetermined by the atomic count of all matters in the core.

We describe here and claim a new method of creating magnetic fields in the reactor by introducing special transparent saddling means where heavier elements (i.e. Uranium vapour) in the shape of plasma (21) or vapour or any other state of matter can be positioned irrespective to the atomic weight in between different gas layers or matters which by means of deliberate pumping of rotation of the material within the saddle due to passing of the electrons through the saddle media electromagnetic fields can be created. This method through which high-level magnetic field and consequently high gravitational field forces can be created at low temperatures in the caroline core or in another core can be created, which the magnetic field created can be utilized for high power lamps (i.e. flood lights), or for the creation of strong magnetic fields necessary for shielding, intensive lighting (18B) and high heating (17B).

This method can be applied on a special plasma reactor where the saddle is tubular (25) and this leads to the creation of the condition for tubical magnetic field where materials (like amino-acids or dark matters) could be created within the inner hollow tubical (26) body of the saddle where the magnetic field is created in the outer layer of the tube within the layers of the reactor core.

This method can be applied on a special plasma reactor where the saddle is tubular (25) and this leads to the creation of the condition for tubical magnetic field where materials (like amino-acids or dark matters) could be created within the inner hollow tubical (26) body of the saddle where the magnetic field is created in the outer layer of the tube within the layers of the reactor core the tube creating its own gravitational free access hole, channel or area into any layer or layers of the core or the surrounding environment which the system might create, i.e. for access into the cocoon created by the reactor.

This method can be applied on a special plasma reactor where the saddle is double spherical (25) and this leads to the creation of the condition for spherical magnetic field where materials (like amino-acids or dark matters) could be created within the inner hollow spherical (26) body of the saddle where the magnetic field is created in the outer layer of the sphere within the layers of the reactor core.

A conceptual interesting micro-plasma-reactor has at the outside of the reactor at least one layer and/or zone of one or more material(s) that will provoke or create charged particles (18A) which the interaction of the particles with the magnetic field created in the core of the reactor can create lighting (18B) in any frequencies, or microwave production or heating in the surrounding area or vicinity of the system.

A micro-plasma-reactor can have in the embodiment a mechanical (like watch system, fly-wheel type) and/or electro-magnetic rotational mechanism (16B)(i.e. at 250 rpm) which is connected with (13) or making a whole (16A) with at least one central column (27, 16D) in which at least one container (15, 37) is located that can release precise quantities of the contained matter (i.e. radio-active material or liquid Helium) into the reactor chamber. But a micro-plasma-reactor can have also a fixed central column with on the tip rotational means which pumps through at least one channel - when needed in the plasmatic process - precise quantities of gas or other matter into the reactor chamber from at least one container in the embodiment. The central column may have at least one channel and with on the tip means of ionization (i.e. a micro-wave emitter, lamps, etc.).

A micro-plasma-reactor which has no internal rotating system can be started - by hand (i.e. pushing a spring, screwing, etc.), or magnetically, or wireless, by a Integrated circuit (16C) and/or by a timing mechanism - by the opening or breaking of a closed internal container (15) which holds materials for scintillation of other material. This will activate the reactor.

A micro-plasma-reactor will have an inside-chamber size of 50,000 cm3 maximum, and the smallest micro-plasma-reactor, has an inside-chamber size in nano-dimensions.
The embodiment (11) of a micro-plasma-reactor can be made in any shape and of any material and combination, after the intentional use.

We claim here also a new type of light bulbs and light tubes which are in fact micro-plasma-reactors. These new lighting devices will have in one version at the outside a transparent layer material (14)(i.e. glass) and inside an inert gas - like Neon -, where the charged particles of the gas create an inner circulation using the magnetic field (17A) which created in the core of the reactor to excited the charged particles (18A) for them to glow (18B).
In another versions they have at the outside a double glass wall with between the glass layers of an inert gas - like Neon or any other material - , where interaction between the magnetic fields created in the reactor and the charged particles create inside the glass chamber excitation leading to the creation of light or heat from the boundary of the system (i.e. IR, blue light, heating elements, etc.).
Another version is that at the outside at least two areas of the reactor parameter could be covered by at least two different, two identical or a mixture of matters, possible wise in different states (such as other temperature, variation in pressure,) - which can be encapsulated (i.e. in layers, in tubes, or any kind of containments like square boxes, hexagons, or adjacent to each other), coated, laminated, glued, sprayed or the reactor is suspended within, which can create two or more different electromagnetic waves of different frequencies caused by the same constant strength or varying strength of the magnetic field caused by the inner core(s), what for example results in the creating of two different color lights or one color light and one heating radiation, or for optical communication by fiberglass or similar, or the use in light computers, or for satellite communication.

We claim a light bulb, light tube or lighting system for nano technology or nano communication using a nano sized reactor which is in multi-layer condition where the light from the interaction of the charges of proton or electrons using the magnetic field of the reactor to generate light for nano technology, for nano communication systems or for nano lighting and communication connections.

The new lighting devices can use at the inside the core of their reactor a microwave-lamp as source to create scintillation leading to creation of for example Extreme Ultra Violet lighting (i.e. used in lithography). They can have replaceable covers to have a different radiation effect (i.e. IR, red light, etc.) after wish.

Some of those new lighting devices will have an inner rotative core that creates at least a minimal rotation of the inner material(s) to avoid stagnation. Stagnation would create instability and change of position.

Since the market uses for many years traditional lamps and people have a broad scale of variations the lighting devices can have the same types of fitting as traditional lamps, or existing ISO-norms. So people can just replace the old type lamps at home by new micro-plasma-reactor (MPR) lamps.

One type of micro-plasma-reactor has at least one closed fixed reactor chamber with at least one inert liquid Helium (He) gas or any other materials and an additional dilution of radio-active material so their interaction provokes scintillation.

A micro-plasma-reactor can be placed in any environment, i.e. a greenhouse, where the interaction of the charged particles within that environment and the magnetic field of the reactor could create the conditions necessary - i.e. for growth of plants, decontamination of matters or humidity control - which not necessary can create visible light or tangible heat but i.e. invisible electromagnetic light.

The micro-plasma-reactor can also make a completely new type of battery (30). This will generate and delivers at the same time DC (33) and AC (34) which can be tapped from the same or several different connecting points. A more performing reactor-battery can generate and deliver even at the same time various values of DC and different AC phase power!

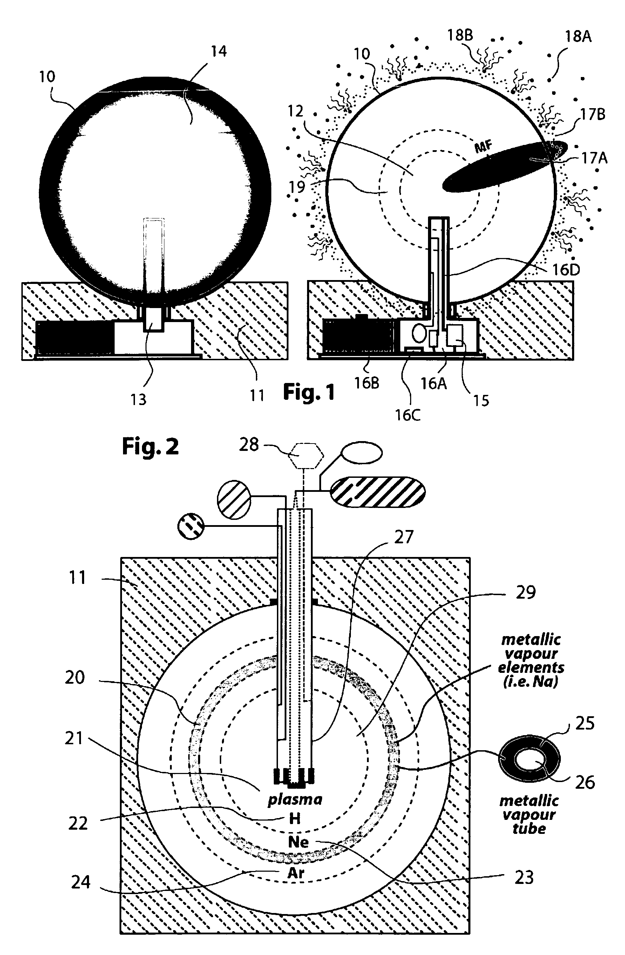

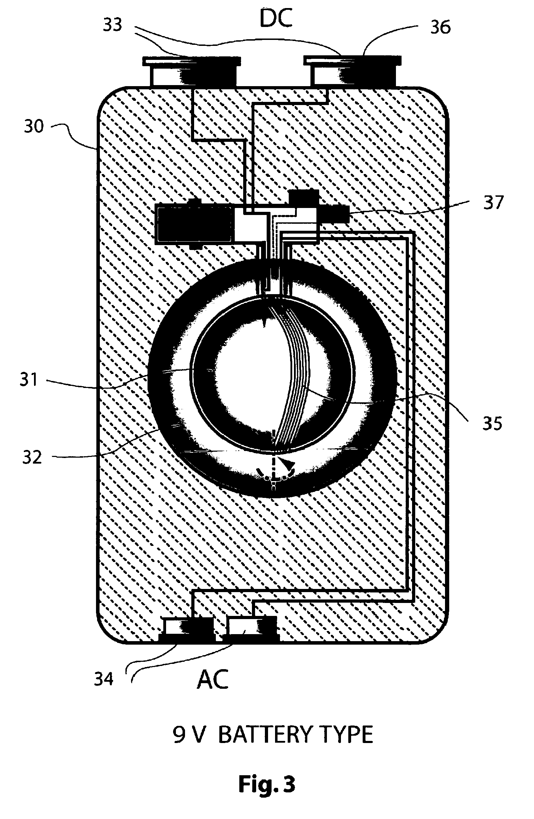

The MPR-Batteries (30) can have the same types of connectors (36) as all traditional batteries have (i.e. figure 3: a 9V Battery type), conform the relevant ISO norms. This means that MPR-batteries can immediately be inserted in all type of handheld devices, offering a quasi lifetime performance.

A special battery with a soft body embodiment of the reactor or transparent can be made where the created EUV in conjunction with at least one created magnetic field of the reactor - this material being inside the core or outside - can be utilized for irradiation purposes or etching or lithography on or in any material.

We claim also a new laser type where the body of the reactor is transparent or a porthole or channel where mono-energetic magnetic radiation can be transmitted through an outer core interaction with a specific charged particle(s). This very powerful laser can be used for various communication, for very narrow wave-band readers, sensors and scanners, printers and cutting machines.

New type of mobile phones and laptops (and all kind of computers) will be powered by micro-plasma-reactor(s) which can create currents at micro electrovolts level which can be placed inside the devices at the production lines since the battery doesn't have to be replaced for a predetermined period due to a specific atomic loading of the caroline core (i.e. 10 years). So in stead of a battery now a reactor will power such devices.

We claim a method to build electronic devices such as mobile phones, laptops, sensor devices, robots, and all other electronic devices without internal power distribution lines, which reduces the number of parts inside such devices.

We claim also microchips, IC's, semi-conductors and/or electric/electronic components (i.e. motherboard) in which a micro-plasma-reactor in integrated or connected with to create or use micro electrovolts power-generated. Such electronics will be build in without outer power source and works independently, which leads to computers with reduced spare parts and no power distribution systems. There is no need to transform current to very low level.

We claim also new types of robots, cars, computers and other electronic devices, which are powered by at least two micro-plasma-reactors, each for the powering of a different part of the electrical, electronic, magnetic and/or mechanical system, i.e. robots in which each moving part has it's own proper - iocai independent - micro-plasma-reactor, the internal and external communication systems have appropriate micro-plasma-reactors and the total system is protected by a magnetic shield powered by another micro-plasma-reactor.

Batteries type reactors or heat generating systems of nano-size can be embedded in any electric, electronic component or into any solid, liquid, gaseous material.

A method is also disclosed by which a micro-plasma-reactor is build inside an electric device, an object, a container and/or a machine as a power source (current, heat, magnetic force, micro pressure devices).

A method is disclosed whereby around at least one reactor core at least one wire (35) is fixed on the surface (31) or in the body of the surface in the appropriate way that by rotation of the inner core (caroline core) or the other core that might be involved through the rotation into the magnetic field(s) which is created inside the reactor leading to the generation of alternating current (AC) within the wire, and which can be tapped for various uses (34).

A method is disclosed to build electronic devices such as mobile phones, laptops, sensor devices, robots, and all other electronic devices without internal power distribution lines, which reduces the number of parts inside such devices.

A method whereby around at least one reactor core at least one wire (35) is fixed on the surface (31) or in the body of the surface in the appropriate way that by rotation of the inner core (caroline core) or the other core that might be involved through the rotation into the magnetic field(s) which is created inside the reactor leading to the generation of alternating current (AC) within the wire, and which can be tapped for various uses (34).

A method where around or inside the embodiment (11) of magnetic plasma-reactor at least one coil is placed within the reach of magnetic field(s) generated in the reactor core(s), i.e. for the creation of AC current.

## Claims

1. A fixed or handheld micro-plasma-reactor (10 + 11) which can be build-in, connected with and/or inserted into an electrical/electronic device (i.e. a refrigerator, various kitchen, household and professional devices, cool box, mobile phones, computer, medical apparatus, laser, satellite systems, desalination unit, desert air-to-water-transformer collecting units, EM-wave transmitter, pacemakers, etc.), an object (i.e. lighting devices in general, light bulb, lamp, torch, light strip, light beam, flood light, floor light, door light, garden light, traffic-light, street-lighting, signalization, meter, sensor, heat-generating clothes, space clothing, pillow, connector, wire, conductors, semi-conductors, microchips, IC's, magnetic locks, etc.), a container (i.e. box, cooking pan, drum, 40FT, greenhouse, etc.) and/or a machine (i.e. vacuum-cleaner, ventilator, calculator, drill, mixer, wheel-chair, pumps, carpenter tools, electrical car, electric bike, radio, office machines, etc.) with the purpose to generate DC current (similar to a battery) and/or AC current or combination of DC and AC-current, and/or for use in lighting, and/or for use heating/cooling, and/or to maintain at least one desired process (i.e. the creation of one or more magnetic fields, two magnetic fields used for creating magnetic locks, etc.) for a long period of time (i.e. 5 years), which can make their functioning possible without being connected to an electrical power network, without being equipped with solar cells or any other manner of traditional power source, and/or without the need to recharge;

2. Micro-plasma-reactor, as described in claim 1, which has at least one closed, internal fixed reactor chamber in which at least one inert gas (19, 23, 24) or any other gasses or elements or isotopes or other matters is present, like Hydrogen (H) (22) and liquid Helium (He), and in which the inside chamber wall(s) is equipped with at least one layer and/or zone of one or more radioactive material(s) that will provoke scintillation;

3. Micro-plasma-reactor, as described in claim 1, which has at least one reactor chamber in which at least one inert gas or any other element or isotope is present, like liquid Helium (He), to which a very light radioactive material (i.e. a dilution, granules, dust) is added that will provoke scintillation;

4. Micro-plasma-reactor, as described in claim 2 and 3, in which additionally at least one atomic gas, metallic material vapour (20, 25) and/or liquid state element of the periodic table is added, in example: Potassium (K), Sodium (Na), Stratum (Sr) for high temperature operations above 1000K, etc.;

5. Method by which in a plasma reactor chamber at least one metallic material vapour (20)(i.e. K, Na, Ca, Mg) or liquid metallic element layer is brought by injection means between at least two layers of inert gasses (i.e. H, He, Ne, Xr), what will create - without rotation or adjustable speed of rotation and if the correct element combinations are used - a magnetic field by the added metallic type layer(s) (in example: element Sodium between Neon20 and Argon 40, or 41) causing a recurring process of creation of magnetic field, where for example if atomic Potassium is used in the reactor, this element through beta decay lead to creation of Argon and the by-product of scintillation for example Neon gas or the Argon itself leading to ionization of the gasses (i.e. Hydrogen) leading to creation of free electron for creation of current and establishment of plasma within the inner (caroline) core (29);

6. Method, as described in claim 5, which make it possible to create magnetic field (17A) within the caroline core (12, 29) with the use of metallic or semi-metallic materials in the form of vapour or solid or any other state of matter in between different layers of the material which their motion within the core can lead to creation of magnetic fields due to the passing of the electrons which created by ionization passing through this metallic or semi-metallic material which is in rotation within the core, and this is a self-sustaining energy system or battery system which the life of the battery can be pre-determined by the atomic count of all matters in the core;

7. Method of creating magnetic fields in the reactor by introducing special transparent saddling means where heavier elements (i.e. Uranium vapour) in the shape of plasma (21) or vapour or any other state of matter can be positioned irrespective to the atomic weight in between different gas layers or matters which by means of deliberate pumping of rotation of the material within the saddle due to passing of the electrons through the saddle media electromagnetic fields can be created;

8. Method, as described in claim 7, through which high-level magnetic field and consequently high gravitational field forces can be created at low temperatures in the caroline core or in another core can be created, which the magnetic field created can be utilized for high power lamps (i.e. flood lights), or for the creation of strong magnetic fields necessary for shielding, intensive lighting (18B) and high heating (17B);

9. Method, as described in claim 7, where the saddle is tubular (25) leading to the creation of the condition for tubical magnetic field where materials (like amino-acids or dark matters) could be created within the inner hollow tubical (26) body of the saddle where the magnetic field is created in the outer layer of the tube within the layers of the reactor core;

10. Method, as described in claim 7, that can be applied on a special plasma reactor where the saddle is tubular (25) and this leads to the creation of the condition for tubical magnetic field where materials (like amino-acids or dark matters) could be created within the inner hollow tubical (26) body of the saddle where the magnetic field is created in the outer layer of the tube within the other metallic layers of the reactor core, i.e. for creation of the condition for the atomic welding within the tube;

11. Method, as described in claim 7, that can be applied on a special plasma reactor where the saddle is tubular (25) and this leads to the creation of the condition for tubical magnetic field where materials (like amino-acids or dark matters) could be created within the inner hollow tubical (26) body of the saddle where the magnetic field is created in the outer layer of the tube within the layers of the reactor core the tube creating its own gravitational free access hole, channel or area into any layer or layers of the core or the surrounding environment which the system might create, i.e. for access into the cocoon created by the reactor;

12. Method, as described in claim 7, that can be applied on a special plasma reactor where the saddle is double spherical (25) and this leads to the creation of the condition for spherical magnetic field where materials (like amino-acids or dark matters) could be created within the inner hollow spherical (26) body of the saddle where the magnetic field is created in the outer layer of the sphere within the layers of the reactor core;

13. Micro-plasma-reactor, as described in claim 1, which has at the outside of the reactor at least one layer and/or zone of one or more material(s) that will provoke or create charged particles (18A) which the interaction of the particles with the magnetic field created in the core of the reactor can create lighting (18B) in any frequencies, or microwave production or heating in the surrounding area or vicinity of the system;

14. Micro-plasma-reactor, as described in claim 1, having either:
a. in the embodiment a mechanical (cfr. Watch system, fly-wheel type) and/or electro-magnetic rotational mechanism (16B)(i.e. at 250 rpm) which is connected with (13) or making a whole (16A) with at least one central column (27, 16D) in which at least one container (15, 37) is located that can release precise quantities of the contained matter (i.e. radio-active material or liquid Helium) into the reactor chamber,
b. a fixed central column with on the tip rotational means which pumps through at least one channel - when needed in the plasmatic process - precise quantities of gas or other matter into the reactor chamber from at least one container in the embodiment,
c. a central column with at least one channel and with on the tip means of ionization (i.e. a micro-wave emitter, lamps, etc.);

15. Micro-plasma-reactor, as described in claim 1, which can be started - by hand (i.e. pushing a spring, screwing, etc.), magnetically, wireless, IC's (16C) and/or by a timing mechanism - by the opening or breaking of a closed internal container (15) which holds materials for scintillation of other material;

16. Micro-plasma-reactor, as described in claim 1, which has an inside-chamber size of 50,000 cm3 maximum;

17. Micro-plasma-reactor, as described in claim 1, which has an inside-chamber size in nano dimensions;

18. Micro-plasma-reactor, as described in claim 1, of which the embodiment (11) could be made in any shape and of any material and combination;

19. Light bulb, as described in claim 1, or light tube, being a micro-plasma-reactor with either:
a. at the outside a transparent layer material (14)(i.e. glass) and inside an inert gas - like Neon -, where the charged particles of the gas create an inner circulation using the magnetic field (17A) which created in the core of the reactor to excite the charged particles (18A) for them to glow (18B),
b. at the outside a double glass, (or other similar transparent or opalic material(s) or combinations) with between the (glass) layers an inert gas - like Neon or any other material - , where interaction between the magnetic fields created in the reactor and the charged particles create inside the (glass) chamber excitation leading to the creation of light or heat from the boundary of the system (i.e. IR, blue light, heating elements, etc.);
c. at the outside at least two areas of the reactor parameter could be covered by at least two different, two identical or a mixture of matters, possible wise in different states (such as other temperature, variation in pressure,) - which can be encapsulated (i.e. in layers, in tubes, or any kind of containments like square boxes, hexagons, or adjacent to each other), coated, laminated, glued, sprayed or the reactor is suspended within, which can create two or more different electromagnetic waves of different frequencies caused by the same constant strength or varying strength of the magnetic field caused by the inner core(s), what for example results in the creating of two different color lights or one color light and one heating radiation, or for optical communication by fiberglass or similar, or the use in light computers, for a new computer-language, or for satellite communication;

20. Light bulb, as described in claim 1, light tube or lighting system for nano technology or nano communication using a nano sized reactor which is in multi-layer condition where the light from the interaction of the charges of proton or electrons using the magnetic field of the reactor to generate light for nano technology, for nano communication systems or for nano lighting and communication connections;

21. Lighting devices, as described in claim 1, in which inside the core of their reactor using a microwave-lamp as source to create scintillation leading to creation of for example Extreme Ultra Violet lighting (i.e. used in lithography);

22. Lighting devices, as described in claim 1, which can have replaceable covers to have a different radiation effect (i.e. IR, red light, etc.) after wish;

23. Lighting devices, as described in claim 1, which have an inner rotative core that creates at least a minimal rotation of the inner material(s), to avoid stagnation;

24. Lighting devices, as described in claim 1, which have the same types of fitting as traditional lamps, or existing ISO-norms;

25. Micro-plasma-reactor, as described in claim 1, can be placed in any environment, i.e. a greenhouse, where the interaction of the charged particles within that environment and the magnetic field of the reactor could create the conditions necessary - i.e. for growth of plants or decontamination of matters - which not necessary can create visible light or tangible heat but i.e. invisible electromagnetic light;

26. Micro-piasma-reactor, as described in claim 1, which has at least one closed fixed reactor chamber with at least one inert liquid Helium (He) gas or any other materials and an additional dilution of radio-active material so their interaction provokes scintillation;

27. Battery (30), as described in claim 1, that generates and delivers at the same time DC (33) and AC (34) which can be tapped from the same or several different connecting points;

28. Battery, as described in claim 1, that can generate and deliver at the same time various values of DC and different AC phase power;

29. Battery (30), as described in claim 1, which has the same types of connectors (36) as all traditional batteries (i.e. figure 3: a 9V Battery type) conform the relevant ISO norms;

30. Battery, as described in claim 1, with a soft body embodiment of the reactor or transparent where the created EUV in conjunction with at least one created magnetic field of the reactor, this material being inside the core or outside, that can be utilized for irradiation purposes or etching or lithography on or in any material;

31. Battery, as described in claim 1, or heat generating system of nano-size which can be embedded in any electric and electronic component or into any solid, liquid, gaseous material;

32. Mobile phones, as described in claim 1, and laptops which are powered by micro-plasma-reactor(s) which can create currents at micro electrovolts which can be placed inside the devices at the production lines since the battery doesn't have to be replaced for a predetermined period due to a specific atomic loading of the caroline core (i.e. 10 years);

33. Robots, as described in claim 1, cars, computers and other electronic devices, which are powered by at least two micro-plasma-reactors, each for the powering of a different part of the electrical, electronic, magnetic and/or mechanical system, i.e. robots in which each moving part has it's own proper - local independent - micro-plasma-reactor, the internal and external communication systems have appropriate micro-plasma-reactors and the total system is protected by a magnetic shield powered by another micro-plasma-reactor;

34. Method to build electronic devices such as mobile phones, laptops, sensor devices, robots, and all other electronic devices without internal power distribution lines, which reduces the number of parts inside such devices;

35. Laser, as described in claim 1, where the body of the reactor is transparent or a porthole or channel where mono-energetic magnetic radiation can be transmitted through an outer core interaction with a specific charged particle(s);

36. Microchips, as described in claim 1, IC's, semi-conductors and/or electric/electronic components in which at least one micro-plasma-reactor in integrated or connected with to create or use micro electrovolts power-generated;

37. A method by which a micro-plasma-reactor is build inside an electric device, an object, a container and/or a machine as a power source (current, heat, magnetic force, micro pressure devices).

38. A method where around or inside the embodiment (11) of magnetic plasma-reactor at least one coil is placed within the reach of magnetic field(s) generated in the reactor core(s), i.e. for the creation of AC current;

39. A method were for overcoming the light generated through the interaction of the magnetic field and the charged particles, either a second equal and opposite polarity magnetic field to be created by the reactor through multi-layering system that there will be not magnetic field present that can cause excitation of the charged particles;

40. A method whereby around at least one reactor core at least one wire (35) is fixed on the surface (31) or in the body of the surface in the appropriate way that by rotation of the inner core (caroline core) or the other core that might be involved through the rotation into the magnetic field(s) which is created inside the reactor leading to the generation of alternating current (AC) within the wire, and which can be tapped for various uses (34);

41. Micro-plasma-reactor, as described in claim 1, being an energy producing system, method, concept and technology whereby in a reactor-embodiment a chain of energetic events is created via a rotative magnetic initiation of a basic ionization of a gas (i.e. hydrogen) or other matters, which then triggers a controllable chain of energy transfers (so called scintillation) to the next following layer(s) of introduced gasses (i.e. He, Ne, Ar, Kr, Xe) and all other introduced elements of the periodic table (i.e. Li, Be, K, Ca, Ti, ...Pt, etc.) and/or their introduced molecule combinations (i.e. vapor), with the possiblity to injection such materials inside the reactor chamber(s), i.e. liquid metallic elements.

## Amended claims

### Amended claims in accordance with Rule 86(2) EPC.

**1.** Method to produce energy within a reactor, which comprises of:
a. sustainable container wall means;
b. at least one chamber that can be sealed;
c. port/gate means for introducing materials in said chamber;
d. outcome means for the collection or the emitting of energy;
e. sealing means for the closing of said chamber, and which contains
f. said materials from which at least one sub-quantity being radioactive and/or being able to be transformed in a radioactive isotope during the internal process;
g. said materials from which at least one sub-quantity being an inert gas and/or being able to be transformed in an inert gas or in inert gas vapour during the internal process;
h. said materials from which at least one sub-quantity being a atomic or molecular metallic material and/or being able to be transformed in a atomic or molecular metallic material, in metallic gas or in metallic vapour during the internal process;
i. said materials from which at least one sub-quantity is hydrogen and/or being able to be transformed in a atomic or molecular hydrogen, during the internal process, and
where upon the sealing of said chamber said materials, preferable in conjunction with the matters of said container wall, said port means, said outcome means and/or said sealing means, start a controllable interaction process - called the initial dynamic process - of repositioning the plasmatic magnetic energy fields of the introduced elements, where a number of the dynamic actions between them lead to the creation of new plasmatic magnetic energy fields, like in atomic, plasmatic and molecular level, where the interaction between at least two of them simultaneously lead to the fragmentation of existing plasmatic energy fields, leading to creation of current and energy from the reactor, and where from these fragmentations can be collected useful energy output;

**2.** Reactor, as specified in claim 1, which is equipped with additional internal motion means, like rotation or vibrations systems, for the enhancement of said initial dynamic process, to generate a larger energy outcome;

**3.** Reactor, as specified in claim 1, which is equipped with additional external motion means, like rotation or vibrations systems, for the enhancement of said initial dynamic process, to generate a larger energy outcome;

**4.** Reactor, as specified in claim 1, which is equipped with at least one additional center core, within said chamber;

**5.** Reactor, as specified in claim 1, which is equipped with additional motion means, like rotation systems, when said motion means are activated, due to centrifugal forces the materials active in said initial dynamic process are positioned in prime layers (i.e. layers of inert gasses like H, He, Ne, Xr, where through the port/gate means additional materials like a metallic vapour or liquid (20)(i.e. K, Na, Ca, Mg), can be introduced and positioned between those prime layers, for the creation of magnetic field(s) due to the atomic repositionings/interactions between the added metallic type layer(s) and said prime layers;

**6.** (2)Reactor, working after the method as described in claim 1, which has at least one dosed, internal fixed reactor chamber in which at least one inert gas (19, 23, 24) or any other gasses or elements or isotopes or other matters is present, like Hydrogen (H) (22) and liquid Helium (He), and in which the inside chamber wall(s) is equipped with at least one layer and/or zone of one or more radioactive material(s) that will provoke first EUV and then scintillation;

**7.** (3)Reactor, working after the method as described in claim 1, which has at least one reactor chamber in which at least one inert gas or any other element or isotope is present, like liquid Helium (He), to which a very light radioactive material (i.e. a dilution, granules, dust) is added that will provoke first EUV and then scintillation;

**8.** (4)Reactor, as described in claim 6 and 7, in which additionally at least one atomic gas, metallic material vapour (20, 25) and/or liquid state element of the periodic table is added, in example: Potassium (K), Sodium (Na), Stratum (Sr) for high temperature operations above 1000K, etc.;

**9.** (6)Reactor, as described in claim 5, which make it possible to create magnetic field (17A) within the center core area (12, 29), with the use of metallic or semi-metallic materials in the form of vapour or solid or any other state of matter in between different layers of the material which their motion within the core can lead to creation of magnetic fields due to the passing of the electrons which created by EUV and then ionization passing through this metallic or semi-metallic material which is in rotation within the core, and this is a self-sustaining energy system or battery system which the life of the battery can be pre-determined by the atomic count of all matters in the core;

**10.** (7)Method of creating magnetic fields in the reactor, as specified in claim 5, by introducing addtitional special transparent saddling means where heavier elements (i.e. Uranium vapour) in the shape of plasma (21) or vapour or any other state of matter can be positioned irrespective to the atomic weight in between different gas layers or matters which by means of deliberate pumping of rotation of the material within the saddle due to passing of the electrons through the saddle media electromagnetic fields can be created;

**11.** (8)Reactor, as described in claim 10, through which high-level magnetic field and consequently high gravitational field forces can be created at low temperatures in the (caroline) center core or in another core can be created, where the magnetic field created can be utilized for high power lamps (i.e. flood lights), or for the creation of strong magnetic fields necessary for shielding, intensive lighting (18B) and high heating (17B);

**12.** (9)Reactor, as described in claim 10, where the saddle is tubular (25) leading to the creation of the condition for tubical magnetic field where materials (like amino-acids or dark matters) could be created within the inner hollow tubical (26) body of the saddle where the magnetic field is created in the outer layer of the tube within the layers of the reactor core;

**13.** (10)Method, as described in claim 10, that can be applied on a special plasma reactor where the saddle is tubular (25) and this leads to the creation of the condition for tubical magnetic field where materials (like amino-acids or dark matters) could be created within the inner hollow tubical (26) body of the saddle where the magnetic field is created in the outer layer of the tube within the other metallic layers of the reactor core, i.e. for creation of the condition for the atomic welding within the tube;

**14.** (11)Method, as described in claim 10, that can be applied on a special plasma reactor where the saddle is tubular (25) and this leads to the creation of the condition for tubical magnetic field where materials (like amino-acids or dark matters) could be created within the inner hollow tubical (26) body of the saddle where the magnetic field is created in the outer layer of the tube within the layers of the reactor core the tube creating its own gravitational free access hole, channel or area into any layer or layers of the core or the surrounding environment which the system might create, i.e. for access into the cocoon created by the reactor;

**15.** (12)Method, as described in claim 10, that can be applied on a special plasma reactor where the saddle is double spherical (25) and this leads to the creation of the condition for spherical magnetic field where materials (like amino-acids or dark matters) could be created within the inner hollow spherical (26) body of the saddle where the magnetic field is created in the outer layer of the sphere within the layers of the reactor core;

**16.** (13)Reactor, as described in claim 1, which has at the outside of the reactor at least one layer and/or zone of one or more material(s) that will provoke or create charged particles (18A) which the interaction of the particles with the magnetic field created in the core of the reactor can create lighting (18B) in any frequencies, or microwave production or heating in the surrounding area or vicinity of the system;

**17.** (14)Reactor, as described in claim 1, having either:
a. in the embodiment a mechanical (cfr. Watch system, fly-wheel type) and/or electro-magnetic rotational mechanism (16B)(i.e. at 250 rpm) which is connected with (13) or making a whole (16A) with at least one central column (27, 16D) in which at least one container (15, 37) is located that can release precise quantities of the contained matter (i.e. radio-active material or liquid Helium) into the reactor chamber,
b. a fixed central column with on the tip rotational means which pumps through at least one channel - when needed in the plasmatic process - precise quantities of gas or other matter into the reactor chamber from at least one container in the embodiment,
c. a central column with at least one channel and with on the tip means of ionization (i.e. a micro-wave emitter, lamps, etc.);

**18.** (15)Reactor, as described in claim 1, which can be started - by hand (i.e. pushing a spring, screwing, etc.), magnetically, wireless, IC's (16C) and/or by a timing mechanism - by the opening or breaking of a closed internal container (15) which holds materials for scintillation of other material;

**19.** (16)Reactor, as described in claim 1, which has an inside-chamber size of 50,000 cm3 maximum;

**20.** (17)Reactor, as described in claim 1, which has an inside-chamber size in nano dimensions;

**21.** (18)Reactor, as described in claim 1, of which the embodiment (11) could be made in any shape and of any sustainable material and combination;

**22.** (19)Reactor, as described in claim 1, acting as a light bulb or light tube, being a reactor with either:
a. at the outside a transparent layer material (14)(i.e. glass) and inside an inert gas - like Neon -, where the charged particles of the gas create an inner circulation using the magnetic field (17A) which created in the core of the reactor to excite the charged particles (18A) for them to glow (18B),
b. at the outside a double glass, (or other similar transparent or opalic material(s) or combinations) with between the (glass) layers an inert gas - like Neon or any other material - , where interaction between the magnetic fields created in the reactor and the charged particles create inside the (glass) chamber excitation leading to the creation of light or heat from the boundary of the system (i.e. IR, blue light, heating elements, etc.);
c. at the outside at least two areas of the reactor parameter could be covered by at least two different, two identical or a mixture of matters, possible wise in different states (such as other temperature, variation in pressure,) - which can be encapsulated (i.e. in layers, in tubes, or any kind of containments like square boxes, hexagons, or adjacent to each other), coated, laminated, glued, sprayed or the reactor is suspended within, which can create two or more different electromagnetic waves of different frequencies caused by the same constant strength or varying strength of the magnetic field caused by the inner core(s), what for example results in the creating of two different color lights or one color light and one heating radiation, or for optical communication by fiberglass or similar, or the use in light computers, for a new computer-language, or for satellite communication;

**23.** (20) Reactor, as described in claim 1, acting like a light bulb, light tube or lighting system for nano technology or nano communication using a nano sized reactor which is in multi-layer condition where the light from the interaction of the charges of proton or electrons (description: or above mentioned fragmentations of PMEF's) using the magnetic field of the reactor to generate light for nano technology, for nano communication systems or for nano lighting and communication connections;

**24.** (21) Reactor, as described in claim 1, acting like a lighting device, in which inside the core of their reactor using a microwave-lamp as source to create scintillation leading to creation of for example Extreme Ultra Violet lighting (i.e. used in lithography);

**25.** (22) Reactor, as described in claim 1, acting like a lighting device, which can said outcome means are replaceable covers to have a different radiation effect (i.e. IR, red light, etc.) after wish;

**26.** (23) Reactor, as described in claim 1, acting like a lighting device, which has an inner rotative core that creates at least a minimal rotation of the inner material(s), to avoid stagnation;

**27.** (24) Reactor, as described in claim 1, acting like lighting device, which has the same types of fitting as traditional lamps, or existing ISO-norms;

**28.** (25)Reactor, as described in claim 1, which can be placed in any environment, i.e. a greenhouse, where the interaction of the charged particles within that environment and the magnetic field of the reactor could create the conditions necessary - i.e. for growth of plants or decontamination of matters - which not necessary can create visible light or tangible heat but i.e. invisible electromagnetic light;

**29.** (26)Reactor, as described in claim 1, which has at least one closed fixed reactor chamber with at least one inert liquid Helium (He) gas or any other materials and an additional dilution of radio-active material so their interaction provokes scintillation;

**30.** (27) Reactor, as described in claim 1, concepted in a battery-like body (30), that generates and delivers at the same time DC (33) and AC (34) which can be tapped from the same or several different connecting points;

**31.** (28) Reactor, as described in claim 1, concepted in a battery-like body (30), that can generate and deliver at the same time various values of DC and different AC phase power;

**32.** (29) Reactor, as described in claim 1, concepted in a battery-like body (30), which has the same types of connectors (36) as all traditional batteries (i.e. figure 3: a 9V Battery type) conform the relevant ISO norms;

**33.** (30) Reactor, as described in claim 1, concepted in a battery-like body (30), with a soft body embodiment of the reactor or transparent where the created EUV in conjunction with at least one created magnetic field of the reactor, this material being inside the core or outside, that can be utilized for irradiation purposes or etching or lithography on or in any material;

**34.** (31) Reactor, as described in claim 1, concepted in a battery-like body (30) or heat generating system of nano-size which can be embedded in any electric and electronic component or into any solid, liquid, gaseous material;

**35.** (32) Mobile phones and laptops which are powered by reactor(s), as specified in claim 1, which can create currents at micro electrovolts which can be placed inside the devices at the production lines since the battery doesn't have to be replaced for a predetermined period due to a specific atomic loading of the caroline core (i.e. 10 years);

**36.** (33) Robots, cars, computers and other electronic devices, which are powered by at least two reactor(s), as specified in claim 1, each for the powering of a different part of the electrical, electronic, magnetic and/or mechanical system, i.e. robots in which each moving part has it's own proper - local independent - reactor, the internal and external communication systems have appropriate reactors and the total system is protected by a magnetic shield powered by another reactor;

**37.** (35) Method to build electronic devices, powered by a reactor as specified in claim 1, such as mobile phones, laptops, sensor devices, robots, and all other electronic devices without internal power distribution lines, which reduces the number of parts inside such devices;

**38.** (35) Reactor, as specified in claim 1, acting like a laser, where said outcome means, namely the body of the reactor - is transparent or a porthole or channel where mono-energetic magnetic radiation can be transmitted through an outer core interaction with a specific charged particle(s);

**39.** (36) Microchips, lC's, semi-conductors and/or electric/electronic components in which at least one reactor, as specified in claim 1, is integrated or connected with to create or use micro electrovolts power-generated;

**40.** (37) A method by which a reactor as specified in claim 1, is build inside an electric device, an object, a container and/or a machine as a power source (current, heat, magnetic force, micro pressure devices);

**41.** (38) A method where around or inside the embodiment (11) of a magnetic fields emitting reactor, reactor as specified in claim 1, at least one coil is placed within the reach of magnetic field(s) generated in the reactor core(s), i.e. for the creation of AC current;

**42.** (39) A method were for overcoming the light generated through the interaction of the magnetic field and the charged particles, either a second equal and opposite polarity magnetic field to be created by the reactor, as specified in claim 5, through multilayering system that there will be not magnetic field present that can cause excitation of the charged particles;

**43.** (40) A method whereby around at least one reactor core at least one wire (35) is fixed on the surface (31) or in the body of the surface in the appropriate way that by rotation of the inner core (caroline core) or the other core that might be involved through the rotation into the magnetic field(s) which is created inside the reactor, as specified in claim 5, leading to the generation of alternating current (AC) within the wire, and which can be tapped for various uses (34);

**44.** (42) Reactor, as described in claim 5, being an energy producing system, method, concept and technology whereby in a reactor-embodiment a chain of energetic events is created via a rotative magnetic initiation of a basic ionization of a gas (i.e. hydrogen) or other matters, which then triggers a controllable chain of energy transfers (so called scintillation) to the next following layer(s) of introduced gasses (i.e. He, Ne, Ar, Kr, Xe) and all other introduced elements of the periodic table (i.e. Li, Be, K, Ca, Ti, ... Pt, etc.) and/or their introduced molecule combinations (i.e. vapor), with the possiblity to injection such materials inside the reactor chamber(s), i.e. liquid metallic elements;

**45.** (1) A fixed or handheld reactor (10 + 11), working after the method as described in claim 1, which can be build-in, connected with and/or inserted into an electrical/electronic device (i.e. a refrigerator, various kitchen, household and professional devices, cool box, mobile phones, computer, medical apparatus, laser, satellite systems, desalination unit, desert air-to-water-transformer collecting units, EM-wave transmitter, pacemakers, etc.), an object (i.e. lighting devices in general, light bulb, lamp, torch, light strip, light beam, flood light, floor light, door light, garden light, traffic-light, street-lighting, signalization, meter, sensor, heat-generating clothes, space clothing, pillow, connector, wire, conductors, semi-conductors, microchips, IC's, magnetic locks, etc.), a container (i.e. box, cooking pan, drum, 40FT, greenhouse, etc.) and/or a machine (i.e. vacuum-cleaner, ventilator, calculator, drill, mixer, wheelchair, pumps, carpenter tools, electrical car, electric bike, radio, office machines, etc.) with the purpose to generate DC current (similar to a battery) and/or AC current or combination of DC and AC-current, and/or for use in lighting, and/or for use heating/cooling, and/or to maintain at least one desired process (i.e. the creation of one or more magnetic fields, two magnetic fields used for creating magnetic locks, etc.) for a long period of time (i.e. 5 years), which can make their functioning possible without being connected to an electrical power network, without being equipped with solar cells or any other manner of traditional power source, and/or without the need to recharge;
